# EUROPÄISCHE PATENTANMELDUNG

(11) **EP 3 672 056 A1**
(43) Veröffentlichungstag der Anmeldung: **24.06.2020**
(21) Anmeldenummer: 19217350.8
(22) Anmeldetag: 18.12.2019
(51) Int. Cl.: H02M 7/5383, H02M 7/523, H02M 1/34, H02M 7/48, H02M 1/00

(54) **WECHSELRICHTER**

(30) Priorität: 20.12.2018 DE 102018222583
(71) Anmelder: Baumüller Nürnberg GmbH, 90482 Nürnberg (DE)
(72) Erfinder: BORMUTH, Bernd, 90482 Nürnberg (DE)
(74) Vertreter: FDST Patentanwälte

(57) **Zusammenfassung**

Die Erfindung betrifft einen Wechselrichter (8) mit einem Gleichstromanschluss (10), der einen ersten Pol (12) und einen zweiten Pol (14) aufweist, und mit einem Wechselstromanschluss (22), der eine erste Phase (24) umfasst, sowie mit einem Brückenzweig (34), der einen ersten Schalter (38) und einen zweiten Schalter (40) aufweist. Mittels des ersten Schalters (38) ist der erste Pol (12) gegen die erste Phase (24) und mittels des zweiten Schalters (40) der zweite Pol (14) gegen die erste Phase (24) geführt. Der erste Schalter (38) weist einen ersten Strang (46) und einen dazu parallel geschalteten zweiten Strang (50) auf, und der erste Strang (46) umfasst ein erstes Schaltelement (48) und eine Induktivität (56), die zueinander in Reihe geschaltet sind. Der zweite Strang (50) weist ein zweites Schaltelement (52) und eine Kapazität (58) auf, die zueinander parallel geschaltet sind. Die Erfindung betrifft ferner ein Verfahren (62) zum Betrieb eines Wechselrichters (8) sowie einen Umrichter (2) mit einem Wechselrichter (8).

## Beschreibung

Die Erfindung betrifft einen Wechselrichter mit einem Gleichstromanschluss, der einen ersten Pol und einen zweiten Pol aufweist, und mit einem Wechselstromanschluss, der eine erste Phase umfasst. Zudem weist der Wechselrichter einen Brückenzweig mit einem ersten Schalter und mit einem zweiten Schalter auf. Die Erfindung betrifft ferner einen Umrichter mit einem Wechselrichter. Der Wechselrichter ist bevorzugt ein Bestandteil einer Industrieanlage.

Industrieanlagen weisen meist eine rotierende elektrische Maschine auf, mittels derer ein Objekt angetrieben wird, wie z.B. ein Förderband. Hierfür weist die elektrische Maschine einen Rotor sowie einen Stator auf, wobei bei Betrieb der Rotor aufgrund einer magnetischen Wechselwirkung mit dem Stator rotiert wird. Insbesondere bei einer vergleichsweise leistungsstarken elektrischen Maschine (Elektromotor) weist der Rotor eine Anzahl an Permanentmagneten auf, und mittels des Stators wird ein rotierendes Magnetfeld erzeugt. Mit anderen Worten handelt es sich um einen bürstenlosen Elektromotor, weswegen eine Funkenbildung aufgrund der Bestreichung eines Kommutators mittels Bürsten vermieden ist. Infolgedessen ist es erforderlich, den Stator mittels eines im Wesentlichen sinusförmigen elektrischen Stroms zu bestromen, wobei die Frequenz des elektrischen Stroms proportional zur Drehzahl der elektrischen Maschine ist, und wobei mittels der Amplitude des elektrischen Stroms das Drehmoment des Elektromotors eingestellt wird. Somit ist es erforderlich, die Frequenz und die Amplitude des elektrischen Stroms zu regeln oder zumindest zu steuern und an die Erfordernisse an den Elektromotor anzupassen.

Hierfür werden Umrichter eingesetzt, die an ein Stromnetz angeschlossen werden, das eine Netzfrequenz aufweist. Das Stromnetz führt meist einen Dreiphasenwechselstrom mit einer Frequenz von 50 Hertz. Dieser wird mittels eines Gleichrichters des Umrichters in einen Gleichstrom transformiert und mittels eines Wechselrichters des Umrichters in einen Wechselstrom, der an die Anforderungen an den Elektromotor angepasst ist. Der Wechselrichter umfasst meist eine Brückenschaltung, insbesondere eine B6-Schaltung, wobei jeder Brückenzweig einen Halbleiterschalter aufweist. Diese werden mittels einer Schaltfrequenz angesteuert und somit von einem leitenden in einen nicht leitenden Zustand versetzt. Mit anderen Worten werden die Halbleiterschalter gepulst betrieben. Bei jedem Schaltvorgang liegt an jedem der Halbleiterschalter ein vergleichsweise hoher Wert der elektrischen Spannung und des elektrischen Stroms an, was zu Verlusten, sogenannten Schaltverlusten führt. Daher ist die Verlustleistung des vollständigen Umrichters abhängig von der Anzahl der Schaltvorgänge.

Zudem erfolgt aufgrund der Schaltvorgänge und der vorhandenen parasitären Kapazitäten bei jedem der Schaltvorgänge eine Beeinflussung des Zwischenkreises und somit auch des Gleichrichters. Infolgedessen ist die Leistungsentnahme aus dem Stromnetz nicht konstant, sodass in die dort geführten Ströme Störungen eingebracht werden. Aufgrund dieser Störung kann eine Beanspruchung des Stromnetzes und/oder weiterer damit elektrisch kontaktierter Geräte erfolgen.

Der Erfindung liegt die Aufgabe zugrunde, ein besonders geeigneten Wechselrichter und ein besonders geeigneten Umrichter anzugeben, wobei insbesondere Verluste und/oder eine Rückwirkung in ein speisendes Netz und/oder eine damit verbundene elektrische Maschine reduziert sind.

Hinsichtlich des Wechselrichters wird diese Aufgabe durch die Merkmale des Anspruches 1 und hinsichtlich des Umrichters durch die Merkmale des Anspruchs 10 erfindungsgemäß gelöst. Vorteilhafte Weiterbildungen und Ausgestaltungen sind Gegenstand der jeweiligen Unteransprüche.

Der Wechselrichter ist beispielsweise ein Bestandteil einer Industrieanlage und wird vorzugsweise zur Bestromung eines Elektromotors herangezogen. Insbesondere dient der Wechselrichter der Bereitstellung eines Wechselstroms und/oder einer Wechselspannung. Der Wechselrichter umfasst einen Gleichstromanschluss, der einen ersten Pol und einen zweiten Pol aufweist. Bei Betrieb ist zwischen dem ersten Pol und dem zweiten Pol eine elektrische Spannung vorhanden, die beispielsweise größer oder gleich 300 V, 500 V, 700 V, 900 V oder 1100 V ist. Vorzugsweise ist die elektrische Spannung zwischen den beiden Polen kleiner oder gleich 400 V, 600 V, 800 V, 1100 V oder 1200 V. Der Gleichstromanschluss ist hierfür geeignet, insbesondere vorgesehen und eingerichtet.

Der erste Pol weist zweckmäßigerweise gegenüber dem zweiten Pol ein positives elektrisches Potential auf. Der Gleichstromanschluss ist zum Beispiel geeignet, insbesondere vorgesehen und eingerichtet, mit einem Gleichrichter oder zumindest einem Gleichstromzwischenkreis elektrisch kontaktiert zu werden.

Ferner weist der Wechselrichter einen Wechselstromanschluss auf, der eine erste Phase umfasst. Bei Betrieb wird mittels der ersten Phase zweckmäßigerweise ein Wechselstrom geführt oder eine Wechselspannung. Insbesondere ist im Montagezustand an dem Wechselstromanschluss eine elektrische Maschine, wie ein Elektromotor angeschlossen. Hierfür ist der Wechselstromanschluss geeignet, insbesondere vorgesehen und eingerichtet.

Ferner weist der Wechselrichter einen Brückenzweig mit einem ersten Schalter und einem zweiten Schalter auf. Hierbei ist mittels des ersten Schalters der erste Pol gegen die erste Phase und mittels des zweiten Schalters der zweite Pol gegen die erste Phase geführt. Somit sind die beiden Schalter elektrisch in Reihe zwischen die beiden Pole geschaltet, wobei die erste Phase elektrisch mit den beiden Schaltern kontaktiert ist, und somit insbesondere einen Mittenabgriff dazwischen bildet. Infolgedessen ist es möglich, als elektrisches Potential, das an der erste Phase anliegt, entweder das elektrische Potential des ersten Pols oder das elektrische Potential des zweiten Pols zu wählen. Insbesondere ist der Brückenzweig mittels der beiden Schalter sowie des etwaigen vorhandenen Mittenabgriffs zwischen den beiden Schaltern gebildet. Geeigneterweise ist zwischen den Mittenabgriff und der erste Phase kein weiteres elektrisches Bauteil angeordnet. Zweckmäßigerweise ist zwischen dem ersten Schalter und dem ersten Pol und/oder dem zweiten Schalter und dem zweiten Pol kein weiteres elektrisches Bauteil angeordnet.

Der erste Schalter weist einen ersten Strang und einen dazu parallel geschalten zweiten Strang auf. Mit anderen Worten sind die beiden Stränge elektrisch parallel zueinander, und der erste Schalter ist zweckmäßigerweise mittels der beiden Stränge gebildet. Alternativ hierzu weist der erste Schalter noch weitere Stränge auf, die insbesondere parallel zu den beiden Strängen geschaltet sind. Der erste Strang weist ein erstes Schaltelement sowie eine Induktivität auf, die zueinander in Reihe geschaltet sind. Mit anderen Worten ist mittels des ersten Schaltelements und der Induktivität eine elektrische Reihenschaltung gebildet. Insbesondere ist der erste Strang mittels der elektrischen Reihenschaltung aus dem ersten Schaltelement sowie der Induktivität gebildet. Alternativ hierzu weist der erste Strang noch weitere elektrische und/oder elektronische Bauelemente auf.

Der zweite Strang weist ein zweites Schaltelement und eine Kapazität auf. Hierbei ist die Kapazität parallel zu dem zweiten Schaltelement geschaltet und somit das zweite Schaltelement mittels der Kapazität überbrückt. Zusammenfassend ist elektrisch eine Parallelschaltung aus dem zweiten Schaltelement sowie der Kapazitäten realisiert. Vorzugsweise ist der zweite Strang mittels des zweiten Schaltelements sowie der Kapazität gebildet. Alternativ hierzu weist der zweite Strang noch weitere elektrische und/oder elektronische Bauelemente auf.

Aufgrund der Induktivität wird ein Anstieg eines mittels des ersten Schaltelements geführten elektrischen Stroms begrenzt. Mit anderen Worten wird nach Betätigung des ersten Schaltelements erst allmählich ein durch das erste Schaltelement fließender elektrischer Strom aufgebaut. Somit wird einerseits bei Betätigung des ersten Schaltelements nicht sowohl eine anliegende elektrische Spannung sowie ein elektrischer Strom in einer vergleichsweise kurzen Zeit geschaltet, was zu erhöhten Verlusten führt. Mit anderen Worten werden mittels der Induktivität Schaltverluste begrenzt. Andererseits wird aufgrund des verringerten Stromanstiegs eine Rückwirkung in das zu speisenden Netz, also insbesondere auf den Gleichstromanschluss und somit den erste und zweiten Pol verringert. Mit anderen Worten werden dort Schaltspitzen aufgrund des erst allmählich einsetzenden elektrischen Stromflusses vermieden. Aufgrund der Kapazität wird eine an dem zweiten Schaltelement anliegende elektrische Spannung begrenzt. Mit anderen Worten wird mittels der Kapazität eine Überspannung an dem zweiten Schaltelement vermieden. Somit erfolgt auch bei einem abgeschalteten zweiten Schaltelement keine Ausbildung einer Überspannung.

Vorzugsweise ist der Wechselrichter mittels eines Verfahrens betrieben, bei dem ein Schaltvorgang durchgeführt wird. Hierbei wird der erste Schalter zweckmäßigerweise in einen elektrisch leitenden Zustand versetzt. Aufgrund des Schaltens des ersten Schalters wird somit die erste Phase auf das gleiche elektrische Potential wie der erste Pol gebracht.

Bei dem Schalten wird zunächst nur das erste Schaltelement betätigt, sodass dieses in einen elektrisch leitenden Zustand versetzt wird. Hierbei wird das zweite Schaltelement zunächst in einem elektrisch nicht leitenden Zustand belassen. Aufgrund der Induktivität setzt ein verlangsamter elektrischer Stromfluss ein, sodass das elektrische Potential der ersten Phase allmählich auf das elektrische Potential des ersten Pols gebracht wird. Aufgrund der Induktivität ist ein fließender elektrischer Strom begrenzt, sodass eine Überbelastung des ersten Schaltelements verhindert ist. Vorzugsweise wird nach einer bestimmten Zeitspanne das zweite Schaltelement betätigt, sodass auch mittels dessen der elektrische Strom geführt wird. Hierbei ist aufgrund des ersten Schaltelements eine über das zweite Schaltelement anfallende elektrische Spannung bereits verringert und beispielsweise gegen 0 V gebracht oder beträgt lediglich eine geringe Abweichung hiervon. Infolgedessen entstehen aufgrund des Schaltens lediglich vergleichsweise geringe elektrische Verluste. In Folge der Betätigung sind die beiden Schaltelement elektrisch leitend, sodass mittels dieser jeweils lediglich die Hälfte des zu führenden elektrischen Stroms geführt wird. Somit können vergleichsweise kostengünstige Schaltelement herangezogen werden.

Bei einem Ausschalten des ersten Schalters wird vorzugsweise ebenfalls zunächst das erste Schaltelement betätigt. Infolgedessen wechselt der zwischen dem ersten Pol und der erste Phase geführte elektrische Strom auf das zweite Schaltelement. Da bei dem Schalten lediglich eine vergleichsweise geringe elektrische Spannung zwischen der ersten Phase und dem erste Pol anliegt, ist eine Belastung des zweiten Schaltelements vergleichsweise gering. Weil bei dem Schalten des ersten Schaltelements dessen elektrischer Widerstand erhöht wird, bildet sich langsam eine elektrische Potentialdifferenz aus, und ein Teil der in der Induktivität gespeicherten elektrischen Energie wird über das erste Schaltelement abgeführt. Etwaige nicht über das erste Schaltelement abfließende elektrische Energie wird hierbei beispielsweise in Verlustwärme umgesetzt.

Nach Betätigung des ersten Schaltelements wird das zweite Schaltelement betätigt, wobei dazwischen eine Zeitspanne liegt. Die Zeitspanne ist beispielsweise gleich der Zeitspanne beim Einschalten gewählt oder weicht hiervon ab. Beim Schalten des zweiten Schaltelements wird mittels der Kapazität die anliegende elektrische Spannung begrenzt. Bei Abschalten des zweiten Schaltelements, also bei einem Erhöhen von dessen elektrischen Widerstand, wird ein etwaiger vorherrschender Stromfluss, der insbesondere aufgrund von Induktivitäten, die an der ersten Phase angeschlossen sind, hervorgerufen wird, zumindest teilweise mittels der Kapazität geführt. Somit erfolgt beim zweiten Schaltelement ebenfalls kein Schalten von sowohl einer vergleichsweise großen anliegenden elektrischen Spannung sowie eines vergleichsweise großen fließenden elektrischen Stroms, sodass näherungsweise keine elektrischen Verluste vorhanden sind.

Aufgrund der verringerten Rückwirkung auf die Gleichstromseite sind insbesondere Netzdrosseln oder sonstige Filter nicht erforderlich oder können zumindest geringer dimensioniert werden. Somit sind Herstellungskosten reduziert. Falls mittels des Wechselrichters ein vergleichsweise großer elektrischer Strom geführt werden soll, ist es zudem meist erforderlich, pro Schalter bereits mehrere Schaltelemente vorzusehen, weswegen die Herstellungskosten des Wechselrichters, also insbesondere des Brückenzweigs, aufgrund des ersten Schalters nicht erhöht sind. Vorzugsweise ist zumindest eines der Schaltelemente, vorzugsweise beide, mittels einer Diode überbrückt. Hierbei ist aufgrund der Diode zweckmäßigerweise ein Stromfluss von der ersten Phase zu dem ersten Pol möglich und die Diode ist mit deren Sperrrichtung geeignet positioniert. Alternativ oder besonders bevorzugt in Kombination hierzu sind die Schaltelemente mittels Halbleiterschaltern, vorzugsweise Leistungshalbleiterschaltern, realisiert. Die Schaltelemente sind beispielsweise MOSFETs oder IGBTs und weisen somit insbesondere intrinsisch bereits die Diode auf, die als Freilaufdioden ausgeschaltet ausgestaltet sind. Alternativ hierzu sind die Schaltelemente beispielsweise ein GTO, ein JFET, ein IGBT oder ein sonstiger Feldeffekttransistor oder ein Thyristor. Das Grundmaterial des Halbleiterschalters ist beispielsweise Silizium, Siliziumcarbid, Galliumarsenid oder Galliumnitrid. In einer Alternative ist beispielsweise eines der Schaltelemente als diskretes Schaltelement ausgestaltet, insbesondere als Relais.

Zweckmäßigerweise ist das erste und zweite Schaltelement geeignet, einen elektrischen Strom und eine elektrische Spannung zu schalten, die größer als 1 Ampere und 24 Volt sind. Zweckmäßigerweise ist die schaltbare elektrische Spannung größer oder gleich 100 Volt, 500 Volt, 600 Volt, 700 Volt, 800 Volt, 1000 Volt, 1100 Volt, 1200 Volt, 1300 Volt, 1400 Volt, 1500 Volt. Vorzugsweise ist der mittels der beiden Schaltelemente geführte elektrische Strom größer als 5 A, größer als 10 A, größer als 20 A oder größer als 40 A. Geeigneterweise ist der elektrische Strom kleiner als 100 A, 90 A oder 80 A. Vorzugsweise ist der mittels des ersten Schalters geschaltete elektrische Strom im Wesentlichen gleich 50 A, wobei im eingeschalteten Zustand des ersten Schalters hiervon insbesondere jeweils die Hälfte mittels eines der Schaltelemente geführt wird.

Zweckmäßigerweise ist die Frequenz der Ansteuerung der beiden Schaltelemente zwischen 1kHz und 10kHz und zweckmäßigerweise größer oder gleich 2kHz und beispielsweise kleiner oder gleich 5kHz. Vorzugsweise ist die Frequenz im Wesentlichen gleich 4kHz.

Beispielsweise ist die Induktivität zwischen dem ersten Schaltelement und der ersten Phase angeordnet. Somit wird bei Abschalten des ersten Schaltelements etwaige in der Induktivität gespeicherte elektrische Energie zu der ersten Phase geleitet, was Verluste verringert. Besonders bevorzugt jedoch ist die Induktivität zwischen das erste Schaltelement und den erste Pol geschaltet und somit zwischen dem ersten Schaltelement und dem ersten Pol angeordnet. Infolgedessen werden etwaige aufgrund der Betätigung des ersten Schaltelements entstehende Schaltspitzen mittels der Induktivität abgefangen, sodass eine Rückwirkung zu dem Gleichstromanschlusses weiter verringert ist.

Beispielsweise unterscheidet sich der zweite Schalter von dem ersten Schalter und weist beispielsweise lediglich ein einziges Schaltelement auf. Besonders bevorzugt jedoch ist der zweite Schalter baugleich zu dem ersten Schalter und weist somit ebenfalls die beiden Stränge auf, von denen jeweils einer ein Schaltelement umfasst. Hierbei ist bei dem ersten Strang des zweiten Schalters eine Induktivität in Reihe zu dem ersten Schaltelement des zweiten Schalters geschaltet. Das zweite Schaltelement des zweiten Strangs des zweiten Schalters ist mittels einer Kapazität überbrückt. Aufgrund der Baugleichheit ist es möglich, Gleichteile heranzuziehen, und insbesondere die Schalter modular auszugestalten. Infolgedessen sind Herstellungskosten reduziert. Auch ist eine Montage des Brückenzweigs vereinfacht. Ferner ist auch eine Rückwirkung in das zu speisende Netz oder zumindest auf den Gleichstromanschlusses bei einer Betätigung des zweiten Schalters verringert. Zudem sind auch bei dem zweiten Schalter Schaltverluste reduziert.

Beispielsweise ist bei dem zweiten Schalter die Induktivität zwischen dem zweiten Pol und dem ersten Schaltelement angeordnet. Somit ist eine Rückwirkung weiter verringert. Besonders bevorzugt jedoch ist die Induktivität des zweiten Schalters zwischen dem ersten Schaltelement und der ersten Phase angeordnet. Hierbei ist zwar eine Rückwirkung auf den Gleichstromanschluss vergrößert, jedoch ist eine Ansteuerung des zweiten Schalters vereinfacht, da insbesondere die Schalteingänge der beiden Schaltelemente das gleiche elektrische Potential aufweisen. Mit anderen Worten befinden sich die "Gate"-Anschlüssen der beiden Schaltelemente des zweiten Schalters auf dem gleichen elektrischen Potential, insbesondere wenn die Schaltelemente als Halbleiterschalter, wie MOSFETs, ausgestaltet sind. Das elektrische Potential ist dabei vorzugsweise das des zweiten Pols.

Beispielsweise weist der erste Strang lediglich die Induktivität und das erste Schaltelement auf. Zumindest jedoch ist die Induktivität nicht überbrückt. In einer Alternative hierzu ist die Induktivität mittels einer Diode überbrückt. Hierbei ist zweckmäßigerweise die Diode derart angeordnet, dass ein Rückfluss zu dem ersten Pol ermöglicht ist. Insbesondere ist aufgrund der Diode ein Stromfluss zu dem ersten Pol ermöglicht. Bei Abschalten des ersten Schaltelements wird aufgrund der Induktivität ein Stromfluss aufrechterhalten. Dieser Stromfluss wird mittels der Diode zurück auf den ersten Pol gerichtet, sodass die in der Induktivität gespeicherte elektrische Energie über die Diode zurück zu dem ersten Pol, und beispielsweise zurück auf den Gleichstromanschluss, geleitet wird. Somit sind elektrische Verluste reduziert. Sofern der zweite Schalter baugleich zu dem erste Schalter ist, ist aufgrund der dortigen Diode zweckmäßigerweise ein Stromfluss zu der ersten Phase möglich.

Beispielsweise ist die Induktivität als Spule ausgestaltet. Besonders bevorzugt jedoch ist die Induktivität eine Drossel. Vorzugsweise weist die Induktivität keinen Kern auf. Mit anderen Worten ist die Induktivität kernlos und die Induktivität ist zweckmäßigerweise als Luftkerndrossel ausgestaltet. Zweckmäßigerweise ist die Drossel ringförmig ausgestaltet. Aufgrund einer derartigen Induktivität wird einerseits der Stromanstieg effektiv begrenzt. Andererseits ist die mittels der Induktivität gespeicherte elektrische Energie vergleichsweise gering, sodass elektrische Verluste vergleichsweise gering sind, sofern die vollständige in der Induktivität gespeicherte elektrische Energie in Verlustwärme umgesetzt wird, wenn ein Ableiten davon aufgrund des abgeschalteten ersten Schaltelements nicht möglich ist.

Zweckmäßigerweise weist der Wechselrichter eine Ansteuerschaltung auf, mittels derer die beiden Schaltelemente angesteuert sind. Mittels der Ansteuerschaltung erfolgt eine Ansteuerung des ersten und zweiten Schaltelements, sodass mittels der Ansteuerschaltung das jeweilige Schaltelement in den elektrisch leitenden sowie in den elektrisch nicht leitenden (Schalt-)Zustand versetzt wird. Hierfür weist die Ansteuerschaltung geeigneterweise eine Treiberschaltung auf. Vorzugsweise umfasst die Ansteuerschaltung einen Mikroprozessor, anhand dessen die etwaigen Schaltsignale generiert werden, anhand derer der Schaltzustand der beiden Schaltelemente verändert wird. Insbesondere erfolgt die Erstellung der einzelnen Schaltsignale, mittels derer die beiden Schaltelement beaufschlagt sind, in Abhängigkeit von aktuellen Anforderungen, zweckmäßigerweise einer Leistungsanforderung und oder einer Phasenlage. Zusammenfassend wird bei Betrieb mittels der Ansteuerschaltung der erste Schalter angesteuert. Besonders bevorzugt wird mittels der Ansteuerschaltung ferner der zweite Schalter angesteuert oder sämtliche etwaige weitere Schalter des Wechselrichters.

Vorzugsweise wird mittels der Ansteuerschaltung dann, wenn der erste Schalter betätigt werden soll, zunächst das erste Schaltelement und nach einer Zeitspanne das zweite Schaltelement betätigt. Die Zeitspanne ist zweckmäßigerweise konstant. Alternativ hierzu ist die Zeitspanne beispielsweise abhängig von einer an dem jeweiligen Schaltelement anliegenden elektrischen Spannung. Beim Einschalten wird zweckmäßigerweise das zweite Schaltelement erst dann betätigt, wenn eine an diesem anliegende elektrische Spannung unterhalb eines bestimmten Grenzwerts ist. Beim Ausschalten des ersten Schalters ist die Zeitspanne vorzugsweise derart gewählt, dass ein über das zweite Schaltelement fließender elektrischer Strom einen bestimmten Grenzwert überschreitet. Anhand der Grenzwerte ist insbesondere jeweils die Zeitspanne definiert. Somit ist die Ansteuerschaltung gemäß einem Verfahren betrieben, bei dem zuerst das erste Schaltelement und nach der Zeitspanne das zweite Schaltelement betätigt wird, wobei dies insbesondere sowohl bei einem Einschalten des ersten Schalters als auch bei einem Ausschalten des ersten Schalters erfolgt.

Zweckmäßigerweise ist mittels der Ansteuerschaltung ein Einschaltvorgang des ersten Schaltelements im Vergleich zum Ausschaltvorgang des ersten Schaltelements beschleunigt. Somit wird aufgrund der Ansteuerschaltung das erste Schaltelement vergleichsweise schnell in den elektrisch leitenden Zustand versetzt. Aufgrund der Induktivität ist hierbei dennoch ein vergleichsweise langsamer Anstieg des elektrischen Stromflusses über den ersten Strang gegeben. Aufgrund des hierzu im Vergleich verlangsamten Ausschaltvorgangs wird etwaige in der Induktivität gespeicherte elektrische Energie vergleichsweise lange über das erste Schaltelement abgebaut, sodass dann, wenn das erste Schaltelement in den vollständig nicht leitenden Zustand versetzt ist, lediglich vergleichsweise wenig elektrische Energie noch in der Induktivität vorhanden ist. Somit sind Verluste bei Betrieb reduziert. Zweckmäßigerweise ist die Ansteuerschaltung somit gemäß einem Verfahren betrieben, bei dem der Ausschaltvorgang des ersten Schaltelements im Vergleich zu dem Einschaltvorgang verlangsamt ist. Zusammenfassend dauert insbesondere der Einschaltvorgang des ersten Schaltelements weniger lang als der Ausschaltvorgang.

Besonders bevorzugt in Kombination hierzu erfolgt mittels der Ansteuerung ein beschleunigter Ausschaltvorgang des zweiten Schaltelements im Vergleich zu dem Einschaltvorgang des zweiten Schaltelements. Mit anderen Worten ist der Einschaltvorgang des zweiten Schaltelements im Vergleich zu dem Ausschaltvorgang verlangsamt. Somit dauerte der Einschaltvorgang des zweiten Schaltelements länger als der Ausschaltvorgang des zweiten Schaltelements. Die Änderung der Dauer der Schaltvorgänge des zweiten Schaltelements sind unabhängig von der Änderung der Dauer der Schaltvorgänge des ersten Schaltelements, bevorzugt werden jedoch jeweils die Dauer der Ein-/Ausschaltvorgänge des ersten als auch des zweiten Schaltelement verändert, sodass diese nicht gleich lang sind. Aufgrund des beschleunigten Ausschaltens des zweiten Schaltelements ist ein Ausbilden einer elektrischen Spannung über diese während des Schaltvorgangs ausgeschlossen, oder die elektrische Spannung ist zumindest vergleichsweise gering. Somit sind entstehende Schaltverluste verringert. Eine etwaige dennoch auftretende elektrische Spannung wird mittels des Kondensators abgefangen, der somit aufgeladen wird.

Beispielsweise ist die Dauer des Einschaltvorgangs des zweiten Schaltelements gleich der Dauer des Ausschaltvorgangs des ersten Schaltelements. Geeigneterweise ist die Dauer des Ausschaltvorgangs des zweiten Schaltelements gleich der Dauer des Einschaltvorgangs des ersten Schaltelements.

Beispielsweise unterscheiden sich die beiden Schaltelement. Da aufgrund der Induktivität der mittels des ersten Schaltelements maximal zu tragende elektrische Strom bei einem Einschaltvorgang reduziert ist, sind Verluste und somit eine Erwärmung des ersten Schaltelements reduziert. Sobald aufgrund der Induktivität ein vergleichsweise großer Stromfluss vorliegt, wird dieser zumindest teilweise mittels des zweiten Schaltelements abgefangen. Somit ist es möglich, ein vergleichsweise kostengünstiges Schaltelement für das erste Schaltelement heranzuziehen, insbesondere einen vergleichsweise kostengünstigen Halbleiterschalter. Hierbei ist insbesondere eine Stromtragfähigkeit des ersten Schaltelements reduziert. Besonders bevorzugt jedoch sind die beiden Schaltelemente zueinander baugleich. Somit können Gleichteile herangezogen werden, was Herstellungskosten reduziert. Ferner ist ein falsches Montieren der Schaltelemente auf diese Weise unterbunden.

Vorzugsweise weist der Wechselrichter einen zweiten Brückenzweig auf, und der Wechselstromanschluss umfasst eine zweite Phase. Hierbei ist der zweite Brückenzweig zwischen den ersten Pol und den zweiten Pol geschaltet und mit der zweiten Phase elektrisch kontaktiert. Der zweite Brückenzweig ist insbesondere baugleich zu dem Brückenzweig und weist somit ebenfalls einen ersten und einen zweiten Schalter auf, die miteinander elektrisch in Reihe zwischen die beiden Pole geschaltet sind. Hierbei ist der erste Pol mittels des ersten Schalters gegen die zweite Phase und der zweite Pol mittels des zweiten Schalters gegen die zweite Phase geführt. Zusammenfassend weist der zweite Brückenzweig bevorzugt ebenfalls die zwei Schalter auf, wobei der erste Schalter zweckmäßigerweise baugleich zu dem ersten Schalter des Brückenzweigs und der zweite Schalter zweckmäßigerweise baugleich zu dem zweiten Schalter des Brückenzweigs ist. Mit anderen Worten weist der erste Schalter ebenfalls die beiden zueinander parallelgeschalteten Stränge auf, von denen der eine die Induktivität und der andere die Kapazität umfasst. Infolgedessen ist mittels des Wechselrichters bei Betrieb ein zweiphasiger Wechselstrom bereitgestellt, der mittels der beiden Phasen geführt wird.

Besonders bevorzugt umfasst der Wechselrichter zusätzlich einen dritten Brückenzweig, der ebenfalls einen ersten Schalter und einen zweiten Schalter aufweist. Zudem weist der Wechselstromanschluss eine dritte Phase auf, die mit dem dritten Brückenzweig elektrisch kontaktiert ist. Hierbei ist der erste Pol mittels des ersten Schalters des dritten Brückenzweigs gegen die dritte Phase geführt. Der zweite Pol ist mittels des zweiten Schalters des dritten Brückenzweigs gegen die dritte Phase geführt. Geeigneterweise sind die Schalter des dritten Brückenzweigs baugleich zu denen des Brückenzweigs und/oder des etwaigen zweiten Brückenzweigs. Besonders bevorzugt sind sämtliche Brückenzweige zueinander baugleich, sodass Gleichteile herangezogen werden können. Insbesondere sind die Brückenzweige als Module ausgestaltet, was eine Herstellung vereinfacht. Aufgrund der drei Brückenzweige ist somit ein B6-Umrichter realisiert, also eine Brückenschaltung mit drei Brückenzweigen. Daher ist es möglich, mittels des Wechselrichters bei Betrieb einen dreiphasigen Wechselstrom bereitzustellen, wobei zwischen den einzelnen Wechselstrom insbesondere ein Phasenversatz von 120° vorhanden ist.

Das Verfahren dient dem Betrieb eines Wechselrichters, der einen Gleichstromanschluss mit einem ersten Pol und einem zweiten Pol und einen Wechselstromanschluss mit einer ersten Phase umfasst. Zudem weist der Wechselrichter einen Brückenzweig mit einem ersten Schalter und mit einem zweiten Schalter auf. Mittels des ersten Schalters ist der erste Pol gegen die erste Phase und mittels des zweiten Schalters der zweite Pol gegen die erste Phase geführt. Der erste Schalter weist einen ersten Strang und einen dazu parallel geschalteten zweiten Strang auf. Der erste Strang umfasst ein erstes Schaltelement und eine Induktivität, die zueinander in Reihe geschaltet sind, und der zweite Strang weist ein zweites Schaltelement und eine Kapazität auf, die zueinander parallel geschaltet sind.

Das Verfahren sieht vor, dass zuerst das erste Schaltelement und nach einer Zeitspanne das zweite Schaltelement betätigt wird. Hierbei erfolgt die Betätigung insbesondere dann, wenn ein Schaltzustand des ersten Schalters geändert werden soll. Beispielsweise erfolgt die zeitlich versetzte Ansteuerung der beiden Schaltelemente lediglich bei einem Einschalten des ersten Schalters. Alternativ hierzu erfolgt das zeitlich versetzte Schalten der Schaltelemente lediglich beim Ausschalten des ersten Schalters. Besonders bevorzugt jedoch erfolgt sowohl bei einem Einschalten als auch bei einem Ausschalten des ersten Schalters die zeitlich versetzte Ansteuerung. Beispielsweise unterscheiden sich die Zeitspannen, die bei dem Einschalten und bei dem Ausschalten gewählt werden. Besonders bevorzugt jedoch sind diese gleich und beispielsweise konstant. Alternativ hierzu ist die Zeitspanne abhängig von einem etwaigen über das jeweilige Schaltelement, insbesondere das erste Schaltelement, anfallenden elektrischen Spannung und/oder eines über das zweite Schaltelement geführten elektrischen Stroms.

Insbesondere ist die Zeitspanne beendet, wenn die über das erste Schaltelement und/oder das zweite Schaltelement anfallende elektrische Spannung unterhalb eines bestimmten Grenzwerts ist. Alternativ oder in Kombination hierzu ist die Zeitspanne beendet, wenn ein über das zweite Schaltelement geführter elektrischer Strom größer als ein weiterer Grenzwert ist. Aufgrund des Verfahrens wird bei einem Einschalten des ersten Schalters zunächst allmählich mittels des ersten Schalters ein elektrischer Strom geführt, sodass Rückwirkungen sowie elektrische Schaltverluste reduziert sind. Bei dem Ausschalten wird eine sich ausbildende elektrische Spannung mittels der Kapazität aufgefallen, die somit geladen wird, weswegen näherungsweise keine Verluste vorhanden sind.

Vorzugsweise wird das Verfahren zumindest teilweise mittels einer Ansteuerschaltung des Wechselrichters durchgeführt. Hierfür ist die Ansteuerschaltung geeignet, insbesondere vorgesehen und eingerichtet. Die Ansteuerschaltung ist beispielsweise ein programmierbarer Mikroprozessor oder umfasst diesen. Alternativ hierzu ist die Ansteuerschaltung zumindest teilweise, vorzugweise vollständig, als anwendungsspezifischer Schaltkreis (ASIC) ausgebildet.

Der Umrichter dient vorzugsweise dem Betrieb einer elektrischen Maschine, insbesondere eines Elektromotors. Geeigneterweise ist der Umrichter ein Bestandteil einer Industrieanlage. Insbesondere weist der Umrichter eine maximale Leistungsabgabe zwischen 700 W und 500 kW auf. Zweckmäßigerweise ist die Leistungsabgabe größer oder gleich 1 kW, 5 kW, 10 kW, 50 kW, 100 kW oder 200 kW. Zum Beispiel ist die Leistungsabgabe kleiner oder gleich 400 kW, 250 kW, 100 kW, 50 kW, 15 kW oder 2 kW.

Der Umrichter weist einen Gleichrichter, einen Wechselrichter und einen dazwischengeschalteten Zwischenkreis auf. Der Gleichrichter sowie der Wechselrichter weisen zweckmäßigerweise jeweils einen Gleichstromanschluss mit jeweils einem ersten Pol und einen zweiten Pol auf. Hierbei ist der erste Pol des Gleichrichters gegen den ersten Pol des Wechselrichters und der zweite Pol des Gleichrichters gegen den zweiten Pol des Wechselrichters geführt. Vorzugsweise umfasst der Gleichstromzwischenkreis einen Zwischenkreiskondensator, der elektrisch mit dem ersten Pol und dem zweiten Pol kontaktiert ist. Mittels des Zwischenkreiskondensators ist hierbei eine Pufferkapazität bereitgestellt.

Der Gleichrichter ist beispielsweise ein ungesteuerter Gleichrichter. Alternativ hierzu ist der Gleichrichter beispielsweise gesteuert und/oder rückspeisefähig ausgestaltet. Vorzugsweise umfasst dieser eine Anzahl an Dioden, beispielsweise sechs Dioden, die in einer Brückenschaltung miteinander elektrisch kontaktiert sind. Vorzugsweise ist der Gleichrichter geeignet, insbesondere vorgesehen und eingerichtet, an ein Wechselstromnetz angeschlossen zu werden, das beispielsweise drei Phasen aufweist. Hierbei wird mittels jeder der Phasen zweckmäßigerweise ein sinusförmiger Wechselstrom geführt, wobei sich die Phasen der Wechselströme jeweils um 120° unterscheiden.

Zusätzlich zu dem Gleichstromanschluss umfasst der Wechselrichter einen Wechselstromanschluss, der eine erste Phase aufweist, sowie einen Brückenzweig mit einem ersten Schalter und mit einem zweiten Schalter. Mittels des ersten Schalters ist der erste Pol gegen die erste Phase und mittels des zweiten Schalters der zweite Pol gegen die erste Phase geführt. Der erste Schalter weist einen ersten Strang und einen dazu parallel geschalteten zweiten Strang auf. Der erste Strang weist ein erstes Schaltelement und eine Induktivität auf, die zueinander in Reihe geschaltet sind. Der zweite Strang umfasst ein zweites Schaltelement und eine Kapazität, die zueinander parallel geschaltet sind.

Sofern ein Bauteil als erstes, zweites, drittes,... Bauteil bezeichnet wird, ist insbesondere lediglich darunter ein bestimmtes Bauteil zu verstehen. Insbesondere bedeutet dies nicht, dass eine bestimmte Anzahl an derartigen Bauteilen vorhanden ist. So impliziert dies insbesondere nicht, dass der zweite Brückenzweig vorhanden ist, sofern der dritte Brückenzweig vorhanden ist.

Die im Zusammenhang mit dem Wechselrichter genannten Weiterbildungen und Vorteile sind sinngemäß auch auf den Umrichter/das Verfahren zum Betrieb des Wechselrichters zu übertragen und umgekehrt.

Nachfolgend werden Ausführungsbeispiele der Erfindung anhand einer Zeichnung näher erläutert. Darin zeigen:
- Fig. 1: einen Umrichter mit einem Gleichrichter und einem Wechselrichter,
- Fig. 2: schematisch den Wechselrichter,
- Fig. 3: ein Verfahren zum Betrieb des Wechselrichters, und
- Fig. 4, 5: jeweils gemäß Fig. 2 weitere Ausführungsformen des Wechselrichters.

Einander entsprechende Teile sind in allen Figuren mit den gleichen Bezugszeichen versehen.

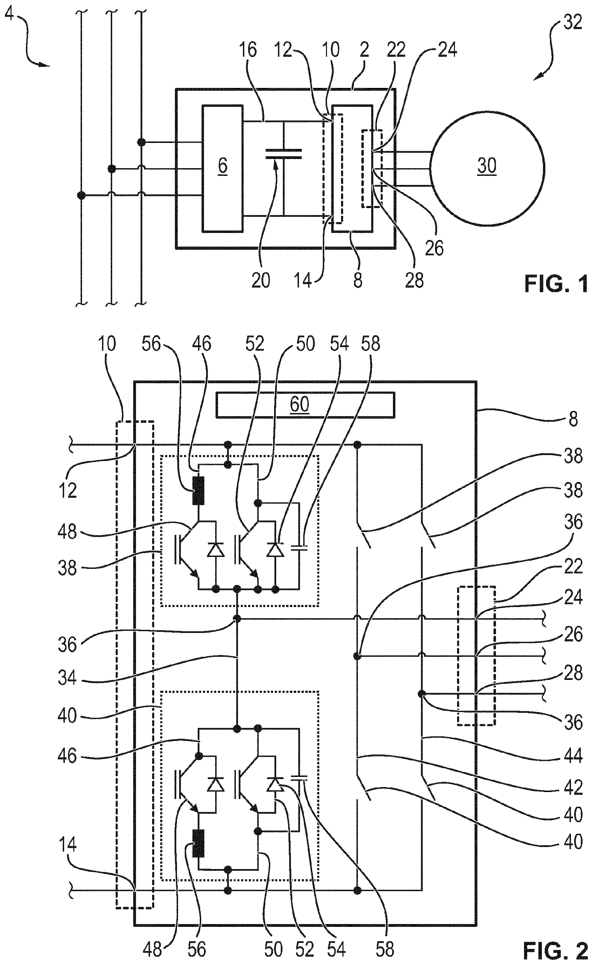

In Figur 1 ist schematisch vereinfacht ein Umrichter 2 dargestellt, der an ein speisendes Netz (Stromnetz) 4 angeschlossen ist. Das speisende Netz 4 ist dreiphasig, und alle drei Phasen des speisenden Netzes 4 sind mit einem Gleichrichter 6 des Umrichters 2 elektrisch kontaktiert. Der Gleichrichter 6 ist ein ungesteuerter Diodengleichrichter und weist eine nicht näher dargestellte Brückenschaltung auf. Der Umrichter 2 weist ferner einen Wechselrichter 8 auf, der einen Gleichstromanschluss 10 umfasst. Der Gleichstromanschlusses 10 weist einen ersten Pol 12 sowie einen zweiten Pol 14 auf, die jeweils an einen entsprechenden Pol eines Gleichstromzwischenkreises 16 des Umrichters 2 angeschlossen sind. Der erste Pol 12 und der zweite Pol 14 sind mittels eines Zwischenkreiskondensators 20 elektrisch miteinander verbunden und gegen einen entsprechenden Anschluss des Gleichrichters 6 geführt. Folglich wird der Gleichstromzwischenkreis 16 mittels des Gleichrichters 6 gespeist.

Der Wechselrichter 8 weist einen Wechselstromanschluss 22 mit einer ersten Phase 24, einer zweiten Phase 26 sowie einer dritten Phase 28 auf. An den Wechselstromanschluss 22 ist eine elektrische Maschine 30 in Form eines bürstenlosen Gleichstrommotors (BLD) angeschlossen. Bei Betrieb wird über die drei Phasen 24, 26, 28 jeweils ein Wechselstrom geführt, mittels dessen nicht näher dargestellte Elektromagneten der elektrischen Maschine 30 bestromt werden. Aufgrund dessen wird ein rotierendes Magnetfeld erstellt.

Der Umrichter 2 sowie die elektrische Maschine 30 sind ein Bestandteil einer Industrieanlage 32. Mittels der elektrischen Maschine 30 ist ein nicht näher dargestelltes Förderband angetrieben, und eine elektrische Leistung der elektrischen Maschine 30 ist zwischen 1 kW und 10 kW. Der Umrichter 2 ist auf eine derartige Leistungsabgabe eingestellt.

In Figur 2 ist schematisch vereinfacht der Wechselrichter 8 gezeigt, der den Gleichstromanschluss 10 mit dem ersten Pol 12 sowie dem zweiten Pol 14 umfasst. Der erste Pol 12 ist mittels eines Brückenzweigs 34 mit dem zweiten Pol 14 verbunden. Der Brückenzweig 34 weist einen Mittenabgriff 36 auf, der gegen die erste Phase 24 des Wechselstromanschlusses 22 geführt ist. Der Brückenzweig 34 umfasst einen ersten Schalter 38, der zwischen dem Mittenabgriff 36 und dem ersten Pol 12 angeordnet ist. Zudem weist der Brückenzweig 34 einen zweiten Schalter 40 auf, der zwischen den zweiten Pol 14 und den Mittenabgriff 36 geschaltet ist. Somit ist mittels des ersten Schalters 38 der erste Pol 12 gegen die erste Phase geführt. Der zweite Pol 14 ist mittels des zweiten Schalters 40 gegen die erste Phase 24 geführt, und die beiden Schalter 38, 40 sind somit elektrisch zueinander in Reihe geschaltet.

Der Wechselrichter 8 weist ferner einen zweiten Brückenzweig 42 auf, der baugleich zu dem Brückenzweig 34 ist und somit ebenfalls einen ersten Schalter 38 sowie einen zweiten Schalter 40 als auch einen Mittenabgriff 36 aufweist. Dieser ist jedoch gegen die zweite Phase 26 des Wechselstromanschlusses 22 geführt. Zudem umfasst der Wechselrichter 8 einen dritten Brückenzweig 44, der ebenfalls baugleich zu dem Brückenzweig 34 ist, und der folglich ebenfalls einen ersten Schalter 38, einen zweiten Schalter 40 sowie einen Mittenabgriff 36 aufweist. Dieser ist jedoch gegen die dritte Phase 28 des Wechselstromanschlusses 22 geführt. Sämtliche Brückenzweige 34, 42, 44 sind zueinander parallel geschaltet und kontaktieren folglich den ersten Pol 12 mit dem zweiten Pol 14. Zudem sind sämtliche erste Schalter 38 sowie sämtliche zweite Schalter 40 jeweils untereinander baugleich. Auch sind die ersten Schalter 38 baugleich zu den zweiten Schaltern 40.

Bei Betätigung der ersten Schalter 38 wird der erste Pol 12 gegen die Phase 24, 26, 28 geschaltet, die dem den betätigten ersten Schalter 38 umfassenden Brückenzweig 34, 42, 44 zugeordnet ist, sodass das elektrische Potential der jeweiligen Phase 24, 26, 28 gleich dem elektrischen Potential des ersten Pols 12 ist. Bei Betätigung des zweiten Schalters 40 wird die dem Brückenzweig 34, 42, 44, die den betätigten zweiten Schalter 40 aufweist, zugeordnete Phase 24, 26, 28 gegen den zweiten Pol 14 geführt.

Jeder Schalter 38, 40 weist einen ersten Strang 46 mit einem ersten Schaltelement 48 sowie einen zweiten Strang 50 mit einem zweiten Schaltelement 52 auf. Die beiden Stränge 46, 50 sind zueinander parallel geschaltet, und die Schaltelemente 48, 52 sind zueinander baugleich und als Halbleiterschalter ausgestaltet. Die Halbleiterschalter sind Leistungshalbleiterschalter und zwar IGBTs. Somit weisen diese jeweils eine Freilaufdiode 54 auf. Sofern für die Schaltelemente 48, 52 andere Halbleiterschalter herangezogen werden sollten, ist insbesondere eine zusätzliche Diode vorhanden.

Der erste Strang 46 weist ferner eine Induktivität 56 auf, die eine Drossel ist. Die Drossel weist eine Induktivität von 0,5 µH auf und ist in Reihe zu dem ersten Schaltelement 48 geschaltet. Sowohl bei dem ersten Schalter 38 als bei dem zweiten Schalter 40 befindet sich die Induktivität 56 auf der dem jeweiligen Pol 12, 14 zugewandten Seite. Somit befindet sich jeweils das erste Schaltelement 48 zwischen der jeweiligen Induktivität 56 und dem Mittenabgriff 36. Der zweite Strang 50 weist eine Kapazität 58 auf, mittels derer das zweite Schaltelement 52 überbrückt ist. Mit anderen Worten ist die Kapazität 58 elektrisch parallel zu dem zweiten Schaltelement 52 geschaltet.

Zudem weist der Wechselrichter 8 eine Ansteuerschaltung 60 auf, mittels derer die einzelnen Schalter 38, 40 und nämlich deren jeweilige Schaltelemente 48, 52 in Abhängigkeit von aktuellen Anforderungen, nämlich einer Leistungsanforderung sowie einer Phasenlage der elektrischen Maschine 30 betätigt werden. Dabei wird mittels der Schalter 38, 40 ein getakteter Gleichstrom bereitgestellt, wobei die Frequenz der Taktung der Schalter 38, 40 4 kHz entspricht. Aufgrund der Taktung sowie der Induktivitäten der elektrischen Maschine 30 ergibt sich an den Phasen 24, 26, 28 ein sinusförmiger Wechselstrom.

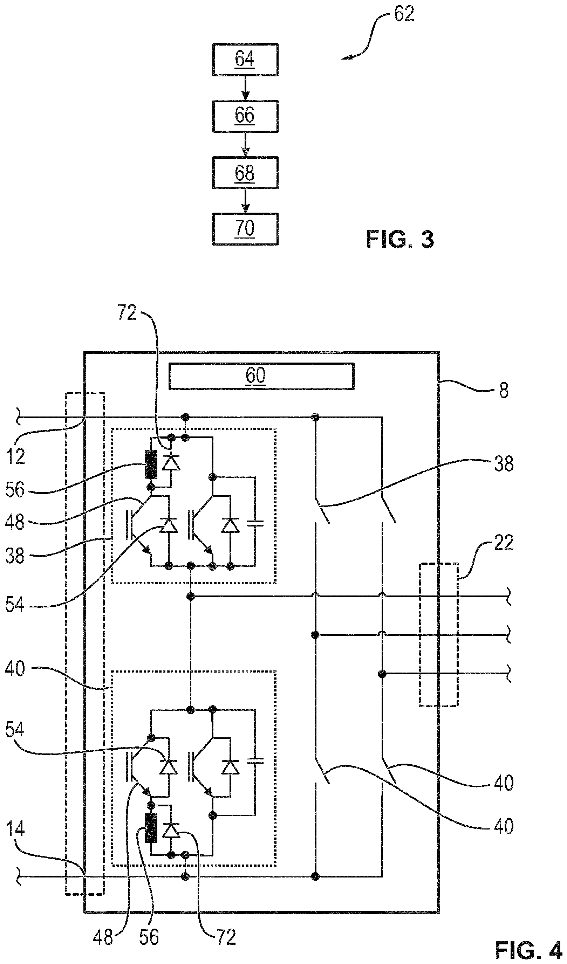

Mittels der Ansteuerschaltung 60 wird ein in Figur 3 gezeigtes Verfahren 62 durchgeführt. In einem ersten Arbeitsschritt 64 wird anhand einer Leistungsanforderung bestimmt, dass einer der ersten Schalter 38 betätigt werden soll. Hierbei wird zunächst das erste Schaltelement 48 des ersten Schalters 38 betätigt. Infolgedessen setzt ein Stromfluss von dem ersten Pol 12 zu der jeweiligen Phase 24, 26, 28 über den ersten Strang 46 des ersten Schalters 38 ein. Infolgedessen wird auch die Induktivität 56 geladen, und daher ist ein Anstieg des fließenden elektrischen Stroms begrenzt. Mit anderen Worten wird aufgrund der Induktivität 56 der Anstieg des Stromflusses begrenzt. Währenddessen ist das zweite Schaltelement 52 in dem elektrisch nicht leitenden Zustand versetzt.

In einem sich anschließenden zweiten Arbeitsschritt 66 wird das zweite Schaltelement 52 betätigt. Zwischen dem ersten Arbeitsschritt 64 und dem zweiten Arbeitsschritt 66 liegt eine Zeitspanne, die insbesondere fest gewählt ist. Alternativ hierzu ist die Zeitspanne anhand der über das zweite Schaltelement 52 anfallenden elektrischen Spannung bestimmt. Sobald diese unterhalb eines bestimmten Grenzwerts ist, ist die Zeitspanne beendet. Aufgrund der Betätigung des zweiten Schaltelements 52 fließt nun auch der elektrische Strom über den zweiten Strang 50. Infolgedessen wird die Hälfte des fließenden Stroms über den ersten Strang 56 und die andere Hälfte über den zweiten Strang 50 des ersten Schalters 38 geführt, sodass eine Belastung der einzelnen Schaltelemente 48, 52 vergleichsweise gering ist.

Falls die jeweilige Phase 24, 26, 28 nicht weiter mit dem ersten Pol 12 elektrisch verbunden sein soll, wird in einem dritten Arbeitsschritt 68 das erste Schaltelement 48 betätigt und somit dieses geöffnet. Bei der Betätigung wird der elektrische Widerstand des ersten Schaltelements 48 erhöht, sodass noch ein Teil der in der Induktivität 56 gespeicherten elektrischen Energie über das erste Schaltelement 48 zu dem Mittenabgriff 36 und folglich zu der jeweiligen Phase 24, 26, 28 abgeführt wird. Das Öffnen des ersten Schaltelements 48, also dessen Ausschaltvorgang, ist hierbei vergleichsweise langsam und zumindest im Vergleich zu dem Einschaltvorgang verlangsamt. Infolgedessen fließt aufgrund des sich langsam erhöhenden elektrischen Widerstands des ersten Schaltelements 48 noch ein vergleichsweise großer Anteil der in der Induktivität 56 gespeicherten elektrischen Energie über das erste Schaltelement 48 ab. Bei dem Einschaltvorgang in dem ersten Arbeitsschritt 64 wird mittels der Induktivität 56 der Stromanstieg begrenzt, sodass der Einschaltvorgang vergleichsweise zügig erfolgen kann.

Da sich die Induktivität 56 zwischen dem ersten Schaltelement 48 und dem ersten Pol 12 befindet, werden bei dem Ausschaltvorgang des ersten Schaltelements 48 entstehende Schaltspitzen mittels der Induktivität 56 abgefangen, weswegen eine Rückwirkung auf den Gleichstromanschlusses 10 verringert ist.

Aufgrund des Öffnens des ersten Schaltelements 48 wird ein Großteil des mittels des ersten Schalters 38 geführten elektrischen Stroms mittels des zweiten Strangs 50 getragen. Nach einer weiteren Zeitspanne, die beispielsweise ebenfalls konstant ist und zweckmäßigerweise dem Wert der Zeitspanne entspricht, der zwischen dem ersten Arbeitsschritt 64 und dem zweiten Arbeitsschritt 66 liegt, wird ein vierter Arbeitsschritt 70 durchgeführt. In einer Alternative ist die Zeitspanne abhängig von dem über den zweiten Strang 50 fließenden elektrischen Stroms. Sofern dieser einen bestimmten Grenzwert überschreitet, wird insbesondere der vierter Arbeitsschritt 70 durchgeführt.

In dem vierten Arbeitsschritt 70 wird das zweite Schaltelement 52 betätigt und somit dieses in den elektrisch nicht leitenden Zustand versetzt. Die infolgedessen über dem zweiten Schaltelement 52 anfallende elektrische Spannung wird mittels der Kapazität 58 aufgefangen und diese somit geladen. Der Ausschaltvorgang des zweiten Schaltelements 52 ist im Vergleich zu dem Einschaltvorgang des zweiten Schaltelements 52 beschleunigt. Somit liegt bei dem zweiten Schaltelement 42 während des vollständigen Ausschaltvorgangs im Wesentlichen keine elektrische Spannung an diesem an, weswegen keine oder lediglich geringe Schaltverluste auftreten. Bei dem Einschaltvorgang hingegen liegt bereits aufgrund der Stromführung mittels des ersten Strangs 46 an dem zweite Schaltelement 52 lediglich eine vergleichsweise geringe oder gar keine elektrische Spannung an.

Nach Durchführung des Verfahrens 62 ist der erste Schalter 38 erneut nicht mehr elektrisch leitend. Zusammenfassend wird beim Ein- und Ausschalten des ersten Schalters 38 jeweils zuerst das erste Schaltelement 48 und nach einer Zeitspanne das zweite Schaltelement 52 betätigt. Das Verfahren 62 wird für sämtliche erste Schalter 38, in Abhängigkeit der jeweiligen Anforderungen sowie für sämtliche zweite Schalter 40 durchgeführt. Da auch bei dem zweiten Schalter 40 die Induktivität 56 jeweils zwischen dem ersten Schaltelement 48 und dem zweite Pol 14 angeordnet ist, erfolgt bei den Schaltvorgängen des ersten Schaltelements 48 im Wesentlichen keine Rückwirkung zu dem Gleichstromanschlusses 10.

Aufgrund der verringerten Rückwirkung zum Gleichstromanschluss 10 erfolgt auch eine verringerte Rückwirkung bei den Schaltvorgängen der Schalter 38, 40 in das speisende Netz 4, weswegen keine Netzfilter oder Motorfilter erforderlich sind. Zudem ist es möglich, zwischen der elektrischen Maschine 30 und dem Umrichter 2 eine vergleichsweise lange elektrische Leitung vorzusehen. Auch ist hierbei eine gesonderte Abschirmung für die zwischen dem Umrichter 2 und der elektrischen Maschine 30 vorhandene Leitungen nicht erforderlich.

Ferner sind parasitäre Ströme über die elektrische Maschine 30, und insbesondere deren Lager verringert. Somit ist einerseits eine Belastung verringert und eine elektromagnetische Verträglichkeit erhöht. Andererseits ist lediglich eine vergleichsweise geringe Isolierung erforderlich.

In Figur 4 ist gemäß Figur 2 eine alternative Ausgestaltungsform des Wechselrichters 8 gezeigt, wobei lediglich der erste und zweite Schalter 38, 40 abgewandelt sind. Hierbei ist jeweils lediglich die Induktivität 56 mittels einer (zusätzlichen) Diode 72 überbrückt. Anderweitige Änderungen hingegen sind nicht vorhanden.

Die Diode 72 ist hierbei derart angeordnet, dass bei dem ersten Schalter 38 ein Stromfluss von dem ersten Schaltelement 48 zu dem ersten Pol 12 ermöglicht ist. Mit anderen Worten ist die Sperrrichtung der Diode 72 gleich der Sperrrichtung der Freilaufdiode 54. Auch bei dem zweiten Schalter 40 ist die Sperrrichtung der Diode 72 parallel zu der Sperrrichtung der Freilaufdiode 54 des ersten Schaltelements 48 des zweiten Schalters 40. Aufgrund der Dioden 72 ist es möglich, die in der Induktivität 56 gespeicherte elektrische Energie zu dem jeweiligen Pol 12, 14 zurückzuführen, wenn das jeweilige erste Schaltelement 48 vollständig geöffnet ist, und über dieses somit kein Stromfluss mehr erfolgen kann, und wenn in der Induktivität 56 noch elektrische Energie gespeichert ist. Aufgrund der Diode 72 ist somit ein elektrischer Verlust weiter verringert.

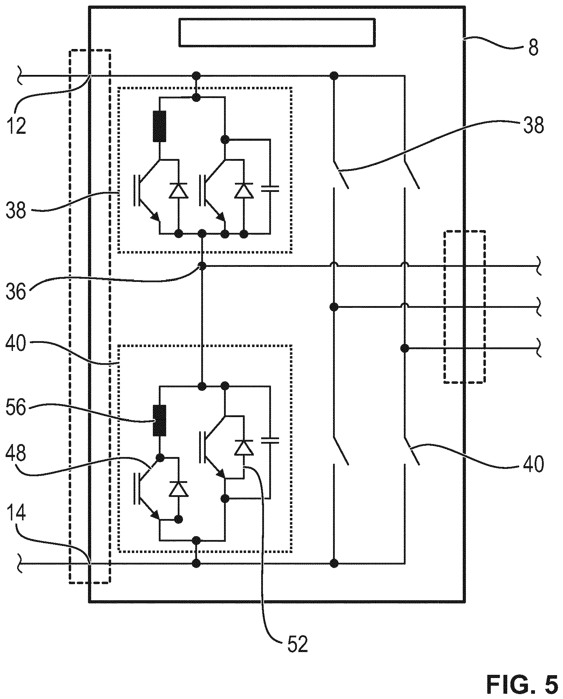

In Figur 5 ist eine weitere Abwandlung des in Figur 2 gezeigten Wechselrichters 8 gezeigt, wobei lediglich die zweiten Schalter 40 abgewandelt sind. Die ersten Schalter 38 hingegen sind nicht verändert. Als einziger Unterschied ist bei den zweiten Schaltern 40 die Induktivität 56 jeweils auf Seiten des Mittenabgriffs 36 angeordnet, sodass sich nunmehr der erste Schalter 38 zwischen der Induktivität 56 und dem zweiten Pol 14 befindet. Mit anderen Worten ist die Induktivität 56 der zweiten Schalter 40 zwischen dem jeweiligen ersten Schaltelement 48 und den Phasen 24, 26, 28 angeordnet. Aufgrund einer derartigen Anordnung werden mittels der Induktivität 56 nicht mehr sämtliche aufgrund der Betätigung des ersten Schaltelements 48 entstehenden Schaltspitzen abgefangen, sodass eine erhöhte Rückwirkung zu dem zweiten Pol 14 erfolgt. Jedoch ist auch weiterhin mittels der Induktivität 56 ein Stromanstieg über den ersten Strang 46 begrenzt. Aufgrund der geänderten Anordnung der Induktivität 56 sind nunmehr die Steuereingänge der beiden Schaltelemente 48, 52 des zweiten Schalters 40 auf dem gleichen elektrischen Potential, nämlich der des zweiten Pols 14. Somit ist eine Ansteuerung der Schaltelemente 48, 52 und somit des zweiten Schalters 40 erleichtert.

In einer nicht näher dargestellten Ausführungsform sind bei dem Wechselrichter gemäß Figur 5 die Induktivitäten 56 mittels der Dioden 72 entsprechend der Ausführungsform der Figur 4 überbrückt.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Umrichter
- 4: speisendes Netz
- 6: Gleichrichter
- 8: Wechselrichter
- 10: Gleichstromanschluss
- 12: erster Pol
- 14: zweiter Pol
- 16: Gleichstromzwischenkreis
- 20: Zwischenkreiskondensator
- 22: Wechselstromanschluss
- 24: erste Phase
- 26: zweite Phase
- 28: dritte Phase
- 30: elektrische Maschine
- 32: Industrieanlage
- 34: Brückenzweig
- 36: Mittenabgriff
- 38: erster Schalter
- 40: zweiter Schalter
- 42: zweiter Brückenzweig
- 44: dritter Brückenzweig
- 46: erster Strang
- 48: erstes Schaltelement
- 50: zweiter Strang
- 52: zweites Schaltelement
- 54: Freilaufdiode
- 56: Induktivität
- 58: Kapazität
- 60: Ansteuerschaltung
- 62: Verfahren
- 64: erster Arbeitsschritt
- 66: zweiter Arbeitsschritt
- 68: dritter Arbeitsschritt
- 70: vierter Arbeitsschritt
- 72: Diode

## Patentansprüche

1. Wechselrichter (8) mit einem Gleichstromanschluss (10), der einen ersten Pol (12) und einen zweiten Pol (14) aufweist, und mit einem Wechselstromanschluss (22), der eine erste Phase (24) umfasst, sowie mit einem Brückenzweig (34), der einen ersten Schalter (38) und einen zweiten Schalter (40) aufweist,
- wobei mittels des ersten Schalters (38) der erste Pol (12) gegen die erste Phase (24) und mittels des zweiten Schalters (40) der zweite Pol (14) gegen die erste Phase (24) geführt ist,
- wobei der erste Schalter (38) einen ersten Strang (46) und einen dazu parallel geschalteten zweiten Strang (50) aufweist,
- wobei der erste Strang (46) ein erstes Schaltelement (48) und eine Induktivität (56) aufweist, die zueinander in Reihe geschaltet sind, und
- wobei der zweite Strang (50) ein zweites Schaltelement (52) und eine Kapazität (58) aufweist, die zueinander parallel geschaltet sind.

2. Wechselrichter (8) nach Anspruch 1,
**dadurch gekennzeichnet,**
**dass** die Induktivität (56) zwischen dem ersten Schaltelement (48) und dem ersten Pol (12) angeordnet ist.

3. Wechselrichter (8) nach Anspruch 1 oder 2,
**dadurch gekennzeichnet,**
**dass** der zweite Schalter (40) baugleich zu dem ersten Schalter (38) ist.

4. Wechselrichter (8) nach Anspruch 3,
**dadurch gekennzeichnet,**
**dass** die Induktivität (56) des zweiten Schalters (40) zwischen dem ersten Schaltelement (48) und der ersten Phase (24) angeordnet ist.

5. Wechselrichter (8) nach einem der Ansprüche 1 bis 4,
**dadurch gekennzeichnet,**
**dass** die Induktivität (56) mittels einer Diode (72) überbrückt ist.

6. Wechselrichter (8) nach einem der Ansprüche 1 bis 5,
**gekennzeichnet durch**
eine Ansteuerschaltung (60), mittels derer die beiden Schaltelemente (48, 52) angesteuert sind, wobei ein Einschaltvorgang des ersten Schaltelements (48) im Vergleich zu einem Ausschaltvorgang des ersten Schaltelements (48) beschleunigt ist.

7. Wechselrichter (8) nach Anspruch 6,
**dadurch gekennzeichnet,**
**dass** ein Ausschaltvorgang des zweiten Schaltelements (52) im Vergleich zu einem Einschaltvorgang des zweiten Schaltelements (52) beschleunigt ist.

8. Wechselrichter (8) nach einem der Ansprüche 1 bis 7,
**dadurch gekennzeichnet,**
**dass** die Schaltelemente (48, 52) baugleich sind.

9. Wechselrichter (8) nach einem der Ansprüche 1 bis 8,
**gekennzeichnet durch**
einen zweiten Brückenzweig (42) der mit einer zweiten Phase (26) des Wechselstromanschlusses (22) kontaktiert ist, und durch einen dritten Brückenzweig (44), der mit einer dritten Phase (28) des Wechselstromanschlusses (22) kontaktiert ist, wobei die Brückenzweige (34, 42, 44) baugleich sind.

10. Verfahren (62) zum Betrieb eines Wechselrichters (8) nach einem der Ansprüche 1 bis 9, bei dem zuerst das erste Schaltelement (48) und nach einer Zeitspanne das zweite Schaltelement (52) betätigt wird.

11. Umrichter (2), insbesondere einer Industrieanlage (32), mit einem Gleichrichter (6), und mit einem Wechselrichter (8) nach einem der Ansprüche 1 bis 9, sowie mit einem elektrisch dazwischen geschalteten Gleichstromzwischenkreis (16), der einen Zwischenkreiskondensator (20) aufweist.
